# EUROPEAN PATENT SPECIFICATION

(11) **EP 3 508 300 B1**
(45) Date of publication and mention of the grant of the patent: **24.11.2021**
(21) Application number: 17846741.1
(22) Date of filing: 04.09.2017
(51) Int. Cl.: B23K 11/11, B23K 11/31, B23K 11/30, B23K 11/36

(54) **RESISTANCE-WELDING EQUIPMENT**
WIDERSTANDSSCHWEISSAUSRÜSTUNG
ÉQUIPEMENT DE SOUDAGE PAR RÉSISTANCE

(30) Priority: 05.09.2016 JP 2016172957
(43) Date of publication of application: 10.07.2019
(73) Proprietor: Nag System Co., Ltd., Settsu-shi, Osaka 566-0055 (JP)
(72) Inventor: WADA, Keiji, Settsu-shi Osaka 566-0055 (JP); ASADA, Takahiro, Settsu-shi Osaka 566-0055 (JP)
(74) Representative: Slingsby Partners LLP
(86) International application number: PCT/JP2017/031776
(87) International publication number: WO 2018/043738

(56) References cited:
- WO-A1-2004/073912
- JP-A- H0 999 380
- JP-A- H0 999 380
- JP-A- 2000 090 904
- JP-A- 2004 337 931
- JP-A- 2004 337 931
- JP-A- 2012 055 937
- JP-A- 2012 055 937

## Description

The present invention relates to resistance-welding equipment that performs resistance welding on a workpiece while interposing and pressing the workpiece between a pair of welding electrodes.

### (Description of Related Art)

Hitherto, resistance-welding equipment that performs resistance welding by applying a current to a pair of welding electrodes while interposing and pressing a metallic workpiece between the welding electrodes, has been known. Generally, in the resistance welding, a large current is applied for a short time, and a nugget (alloy layer) is formed by using heat generation due to resistance of the metal, thereby achieving melt-joining. Since the welding is carried out in a short time, the welding can be efficiently performed and can be less likely to thermally influence the material.

For example, during production of a battery in which battery components are housed in a tubular container, it is necessary to weld a terminal of each battery component and an inner bottom surface of the container that are workpieces. In this case, interposing an intermediate electrode extending in the up-down direction between a pair of upper and lower welding electrodes, inserting the intermediate electrode into the container, and welding the workpieces, are known (for example, Patent Document 1).

### [Related Document]

### [Patent Document]

[Patent Document 1] JP Laid-open Patent Publication No. 2009-252350

JP H09-99380 (base for the preamble of claim 1) describes resistance welding equipment provided with upper and lower part electrodes. Both electrodes are pressurized by upper and lower part cylinders. A feed means, for supplying material to be welded between both electrodes, supports a movable jig. A spring keeps a constant contact state of an upper end surface of a lower electrode and a workpiece. A plurality of pairs of electrodes are provided, and upper and lower electrodes in a pair of electrodes are constructed as an intermediate electrode unit. The intermediate electrode unit is configured to be rotatable in order to locate electrodes at a welding position of the workpiece.

JP 2004-337931 describes a fusing welding machine and a method for manufacturing an upper electrode. An electrode holder is formed with a hermetically closed cooling liquid passage in a cylinder. The surface of a closed end that closes one end side of the cooling liquid passage is formed as a flat electrode holding surface.

### SUMMARY OF THE INVENTION

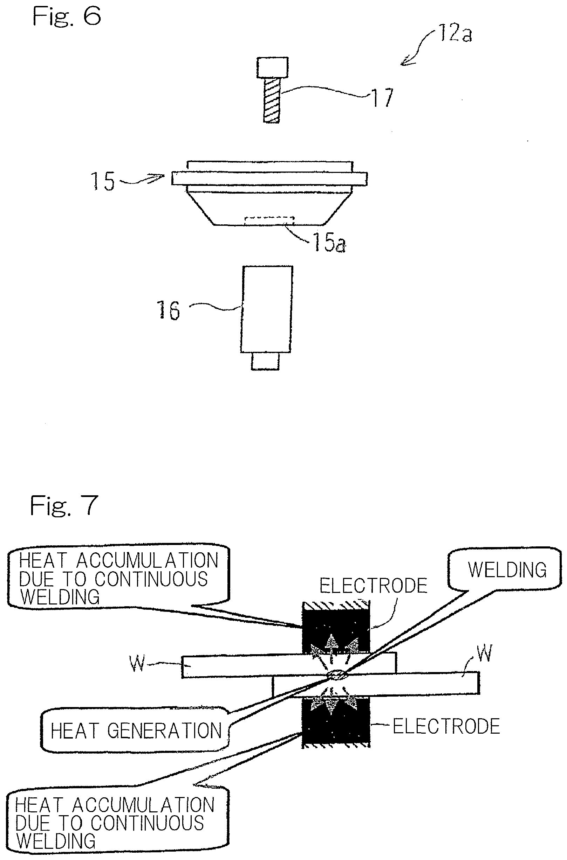

In the above conventional apparatus, in some cases, application of a particularly large current such as 10000 amperes (A) of current is required, or increase in speed of a production line, continuous production, or the like is requested for improving the production efficiency. In such a case, due to the large current, the increase in speed, or the like, as shown in Fig. 7, heat is accumulated in the welding electrode or the intermediate electrode, whereby variations in welding performance occur, or the wear degree of the electrode is increased, causing deterioration of the electrode, in some cases. In addition, in the case where a workpiece is a metal such as aluminum, aluminum is melted and scattered to adhere to each electrode, whereby the wear degree of each electrode is further increased in some cases.

In such a case, the service life of each electrode is shortened, and thus the frequency of electrode replacement is increased, and time for the replacement is taken each time the replacement is performed. Therefore, there is a problem in that it is difficult to improve the production efficiency in resistance welding. Thus, resistance-welding equipment that is able to easily improve production efficiency by reducing the frequency of electrode replacement is desired.

An object of the present invention is to provide resistance-welding equipment that solves the above problem and that is able to easily improve production efficiency by reducing the frequency of electrode replacement even when application of a large current, increase in speed of a production line, or the like is required.

According to the present invention there is provided resistance-welding equipment according to claim 1.

According to this configuration, a workpiece is subjected to resistance welding by sequentially using the plurality of intermediate electrodes. Thus, the use frequency of each intermediate electrode is reduced by the number of intermediate electrodes, whereby the frequency of electrode replacement can be reduced. In addition, since each intermediate electrode is attachable and detachable, the time for replacement of the intermediate electrode can be also shortened. Even in the case where application of a large current, increase in speed of a production line, or the like is required, the production efficiency can be easily improved.

Further, even if the intermediate electrodes are set in a slightly tilted state, the intermediate electrodes are immediately corrected to a standing state. Thus, the intermediate electrodes are assuredly brought into surface contact with the welding electrodes, and time for replacement can be further shortened.

The intermediate electrode set may include
a plurality of pairs of upper and lower intermediate units, and may be configured to resistance-weld, via the upper and lower intermediate electrodes at the welding position being supplied with electric power through the upper and lower welding electrodes, a workpiece interposed between the upper and lower intermediate electrodes. In this case, a workpiece is subjected to resistance welding via all the intermediate electrodes, and thus the production efficiency can be further improved.

In a state where the intermediate electrode of the intermediate unit is stopped at the welding position, one workpiece may be subjected to resistance welding or two or more workpieces may be continuously subjected to resistance welding. In this case, the use state of each intermediate electrode can be appropriately selected in accordance with deterioration of each intermediate electrode based on a welding state or the type of the workpieces.

Preferably, in the intermediate electrode set, the intermediate electrode set jig that holds the intermediate electrodes is formed with a holding hole and the intermediate electrode has a portion to be held that is inserted into the holding hole, the holding hole and the portion to be held are formed in the same tapered shapes, such that centering adjustment of the intermediate electrode with respect to the intermediate electrode set jig is performed by the portion to be held of the intermediate electrode being inserted into the holding hole of the intermediate electrode set jig. In this case, each intermediate electrode is automatically centered, so that centering work becomes easy and time for replacing the intermediate electrode can be further shortened. As a result, the production efficiency can be improved.

Preferably, the resistance-welding equipment includes a cooling device configured to forcedly cool each intermediate electrode at at least a welding standby position that is not the welding position. Therefore, accumulation of heat in each intermediate electrode is prevented, so that variations in welding and deterioration of each intermediate electrode due to heat accumulation can be further suppressed. In addition, preferably, electrode portions of the intermediate electrodes are provided so as to be attachable and detachable. Therefore, when the electrode portion has been worn or when the electrode portion is changed to an electrode portion formed from another material, only the electrode portion can be easily replaced.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a front view showing resistance-welding equipment according to an embodiment of the present invention;
Fig. 2 is a side view showing the resistance-welding equipment in Fig. 1;
Fig. 3A is a partially enlarged view of the resistance-welding equipment embodying the present invention;
Fig. 3B is a partially enlarged view of the resistance-welding equipment embodying the present invention;
Fig. 3C is a partially enlarged view of the resistance-welding equipment embodying the present invention;
Fig. 4A is a configuration diagram showing an intermediate electrode set jig and an intermediate electrode;
Fig. 4B is a configuration diagram showing an intermediate electrode set jig and an intermediate electrode;
Fig. 5A is a configuration diagram showing the intermediate electrode set jig and the intermediate electrode;
Fig. 5B is a configuration diagram showing the intermediate electrode set jig and the intermediate electrode;
Fig. 5C is a configuration diagram showing the intermediate electrode set jig and the intermediate electrode;
Fig. 6 is a configuration diagram showing a contact state of a welding electrode and the intermediate electrode; and
Fig. 7 is a diagram showing a heat generation state during welding.

### DESCRIPTION OF EMBODIMENTS

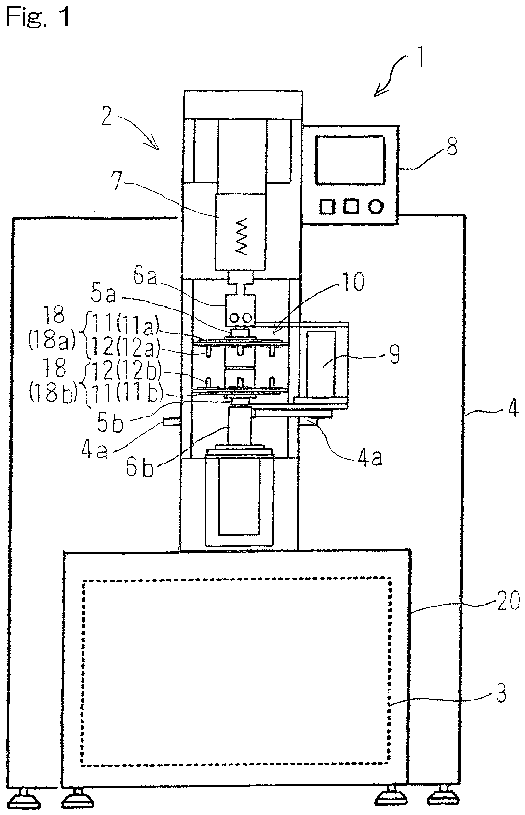

Hereinafter, embodiments of the present invention will be described with reference to the drawings. Fig. 1 is a schematic configuration diagram showing resistance-welding equipment 1 according to an embodiment of the present invention. The equipment 1 is suitable for resistance welding, for which application of a large current, increase in speed of a production line or the like is needed. The equipment 1 is particularly effective for, for example, the case where, as a result of application of a large current such as 10000 amperes (A) of current or increase in speed of a production line for improving production efficiency, variations in welding performance occur due to accumulation of heat in an electrode, or the wear degree of an electrode is increased or a workpiece such as aluminum is melted and scattered to adhere to an electrode, leading to deterioration of the electrode.

The equipment 1 includes: an equipment main body 2 that is fixed on a mount 20; a control unit 3 that is disposed within the mount 20 and controls the entire equipment; and a welding power supply 4 that supplies, for example, DC power to the equipment main body 2. A value of current to be applied to welding electrodes is set with the welding power supply 4.

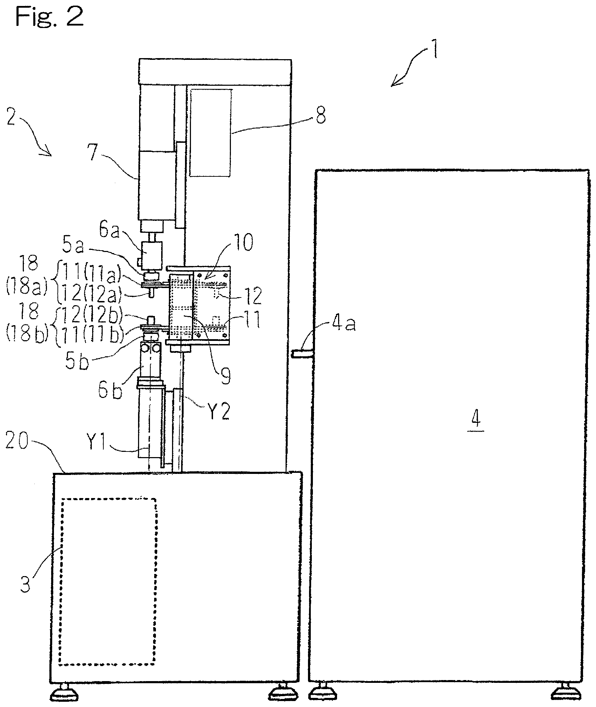

As shown in Fig. 2, the equipment main body 2 includes: a pair of upper and lower welding electrodes 5a and 5b that are provided so as to be movable up and down along a first axis Y1 extending in the up-down direction and that weld a workpiece W interposed therebetween with a current applied thereto; upper and lower electrode holders 6a and 6b that hold the upper and lower welding electrodes 5a and 5b, respectively; and a pressing unit 7 that is disposed above the upper welding electrode 5a and presses the workpiece in the up-down direction via the upper and lower welding electrodes 5a and 5b during the welding. In addition, an operation panel 8 used for operating the equipment 1 is disposed at an upper portion of the equipment main body 2.

An intermediate electrode set 10 is disposed between the upper and lower welding electrodes 5a and 5b. The intermediate electrode set 10 includes a plurality of pairs of upper and lower intermediate units 18a and 18b having intermediate electrode set jigs 11a and 11b and intermediate electrodes 12a and 12b that are attachable to and detachable from the intermediate electrode set jigs 11a and 11b, respectively. The plurality of intermediate units 18a and 18b are configured as a rotary type in which the intermediate units 18a and 18b are provided so as to be rotatable in the circumferential direction such that the intermediate units 18a and 18b sequentially stop at a welding position that is aligned with the upper and lower welding electrodes 5a and 5b in the up-down direction. The intermediate electrode set 10 is driven by a drive motor 9 to rotate about a second axis Y2 that is spaced apart from the first axis Y1 and extends parallel to the first axis Y1 in the up-down direction. The upper and lower intermediate electrodes 12a and 12b receive a current applied from a connector 4a of the welding power supply 4 via the upper and lower electrode holders 6a and 6b through respective electrode portions of the upper and lower welding electrodes 5a and 5b.

The control unit 3 performs not only control of the entire equipment but also pressing control of the pressing unit 7, rotary control of the rotary-type intermediate electrode set 10, etc. The operation panel 8 is provided with a switch portion, a setting portion, etc., related to operations and is also provided with a display device that displays operation content.

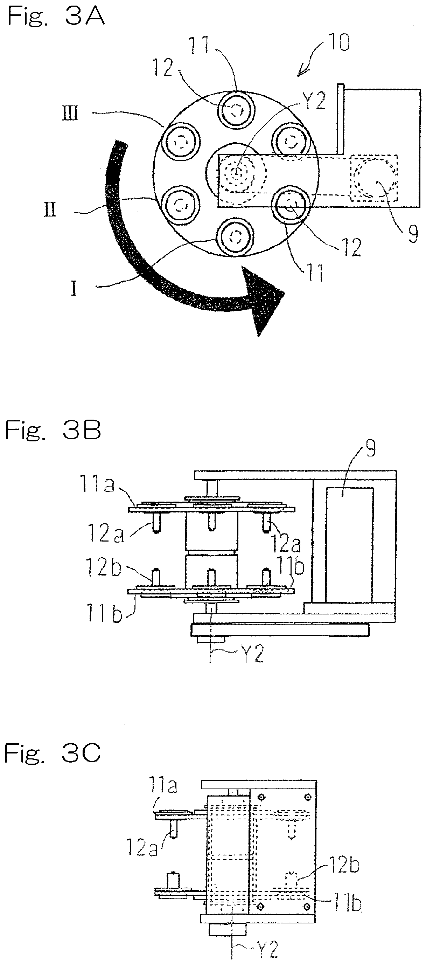

As shown in Fig. 3B and Fig. 3C, the rotary-type intermediate electrode set 10 includes, for example, six upper or lower intermediate electrode set jigs 11a or 11b and six upper or lower intermediate electrodes 12a or 12b, at each of the upper and lower sides, and horizontally rotates about the second axis Y2 in the direction indicated by the arrow as shown in Fig. 3A. As shown in Fig. 2, one pair of the intermediate electrodes 12a and 12b of the plurality of the intermediate units 18a and 18b of which rotation is stopped at the welding position between the upper welding electrode 5a and the lower welding electrode 5b, and a workpiece interposed between the intermediate electrodes 12a and 12b is welded.

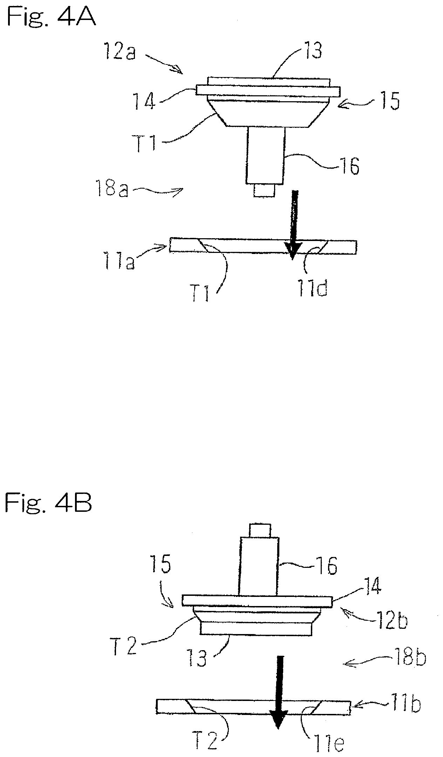

As shown in Fig. 4A and Fig. 4B, the intermediate electrode set jigs 11a and 11b, which hold the intermediate electrodes 12a and 12b, respectively, has respective center portions formed with holding holes 11d and 11e, which have tapered inner surfaces T1 and T2, and the upper and lower intermediate electrodes 12a and 12b each have: a power supply electrode plate 15 having a power supply surface 13 and a jig attachment portion 14; and an electrode portion 16. As shown in Fig. 4A, the upper intermediate electrode 12a has a surface T1 formed on a lower portion of the jig attachment portion 14 in the same tapered shape as the inner surface T1. The intermediate electrode 12a is fixed by being guided by and fitted into the tapered holding hole 11d in the center portion of the intermediate electrode set jig 11a. The intermediate electrode 12a is detachable from the intermediate electrode set jig 11a in the upward direction.

As shown in Fig. 4B, the lower intermediate electrode 12b also has a tapered surface T2 formed on the jig attachment portion 14, and is fixed by being fitted into the holding hole lie having the same tapered shape as the inner surface T2 in the center portion of the intermediate electrode set jig 11a. The intermediate electrode 12a is detachable from the intermediate electrode set jig 11a in the upward direction. The upper and lower intermediate electrodes 12a and 12b are easily detached as described above, the intermediate electrode set 10 can be positioned by merely fitting the upper and lower intermediate electrodes 12a and 12b to the intermediate electrode set jigs 11a and 11b, and the upper and lower intermediate electrodes 12a and 12b are assuredly brought into surface contact with the upper and lower welding electrodes 5a and 5b. Thus, time for replacement can be further shortened. In this example, the intermediate electrode set 10 is positioned with the tapered holes, but a positioning pin that is not shown may be used instead of the tapered holes.

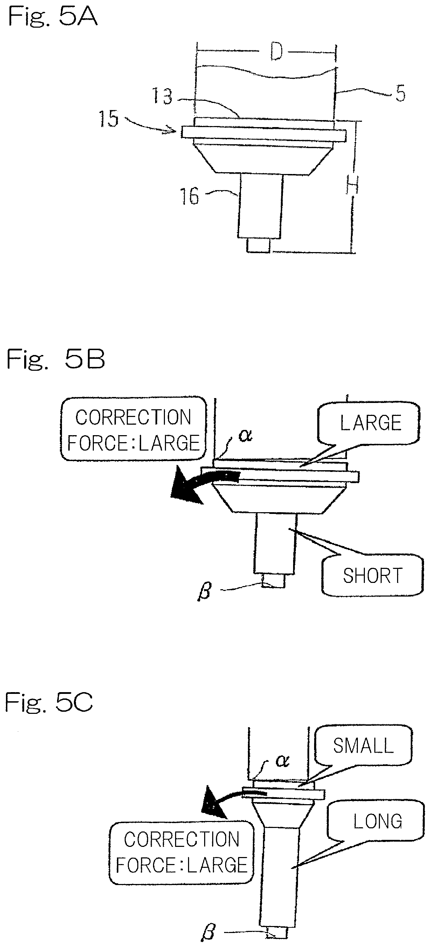

Fig. 5A to Fig. 5C are configuration diagrams showing respective contact states of the welding electrode and the intermediate electrode. As shown in Fig. 5A, the electrode portions of the upper and lower welding electrodes 5a and 5b are brought into surface contact with the power supply surfaces 13 of the upper and lower intermediate electrodes 12a and 12b. In the case where the diameters D of the power supply surfaces 13 of the upper and lower intermediate electrodes 12a and 12b are large and the heights H thereof are short as shown in Fig. 5B, even in a state where the upper and lower intermediate electrodes 12a and 12b are slightly tilted, if the welding electrode 5 and the power supply surface 13 are brought into contact with each other at a point α during pressing, the upper and lower intermediate electrodes 12a and 12b are each brought into a standing state, and correction force that brings the entire power supply surface 13 into contact with the welding electrode 5 becomes large between the point α and a fulcrum β. On the other hand, in the case where the diameter D of each power supply surface 13 is small and the height H is long as shown in Fig. 5C, the correction force becomes small. In each of the intermediate electrodes 12a and 12b, the diameter D of the power supply surface 13 and the height H preferably satisfy D/H≥1/1.2, and more preferably satisfy D/H≥1. Accordingly, the upper and lower welding electrodes 5a and 5b and the upper and lower intermediate electrodes 12a and 12b can be assuredly brought into surface contact with each other, and the diameter D of each power supply surface 13 is large, and thus it is also possible to apply a large current.

As shown in Fig. 6, the electrode portion 16 of the upper intermediate electrode 12a is fitted into a hole 15a of the power supply electrode plate 15 and fixed by a fixing screw 17. The electrode portion 16 is positioned with the hole 15a of the power supply electrode plate 15. The lower intermediate electrode 12b also has the same configuration. Accordingly, when the electrode portion 16 has been worn or when the electrode portion 16 is changed to an electrode portion 16 formed from another material, only the electrode portion 16 can be easily replaced.

In the above resistance-welding equipment 1, the respective intermediate electrodes 12 are sequentially stopped at the welding position, for example, for the first to third times at I to III in Fig. 3A, and different objects to be welded are welded at each time. For example, in the case of performing 1000 shots with one intermediate electrode 12, 6000 shots can be performed with six intermediate electrodes 12 in total. In this case, the use frequency of one intermediate electrode 12 is reduced in proportion to the number of intermediate electrodes 12, so that continuous production corresponding to the number of intermediate electrodes 12 is enabled. As a result, the replacement frequency of each intermediate electrode 12 is reduced, so that the production efficiency can be improved.

In a state where the intermediate electrodes 12 of the intermediate unit 18 is stopped at the welding position, one workpiece may be subjected to resistance welding or two or more workpieces may be continuously subjected to resistance welding. Alternatively, each intermediate electrode 12 may be intermittently stopped at the welding position in such a manner that one or more intermediate electrodes are skipped. In this manner, the use state of each intermediate electrode can be appropriately selected in accordance with deterioration of each intermediate electrode based on a welding state or the type of the workpieces.

A welding interval is increased by the number of intermediate electrodes 12, heat of the intermediate electrodes that are not used for welding during the welding interval is dissipated, and accumulation of heat in each welding electrode (intermediate electrode) is suppressed. Thus, even with natural cooling, it is possible to suppress variations in welding performance and deterioration of the welding electrode due to heat thereof.

Furthermore, a cooling device such as a fan that is not shown may be provided, and the intermediate electrodes 12 at welding standby positions that are not the welding positions may be forcedly cooled, or the intermediate electrodes 12 that are detached may be cooled in this state. Accordingly, deterioration due to heat can be suppressed, resulting in further reduction in frequency of electrode replacement.

As described above, since the rotary-type intermediate electrode set 10 in which the plurality of intermediate electrodes 12 are rotatable in the circumferential direction is provided, workpieces are subjected to resistance welding using the plurality of intermediate electrodes 12. Thus, the use frequency of each intermediate electrode 12 is reduced by the number of intermediate electrodes 12, whereby the frequency of electrode replacement can be reduced. In addition, since each intermediate electrode 12 is attachable and detachable, the time for replacement of the intermediate electrode 12 can be also shortened. Even in the case where application of a large current, increase in speed of a production line or the like is required, the production efficiency can be easily improved.

In this embodiment, as shown in Fig. 3A, Fig. 3B, Fig. 4A, and Fig. 4B, six intermediate units 18a and six intermediate units 18b are provided between the upper and lower welding electrodes 5a and 5b at the upper and lower sides, respectively. However, each of the numbers of intermediate units 18a and 18b is not limited to this number and may be less than 6 or may be 7 or more. In addition, the upper intermediate units 18a may be provided only at the upper welding electrode 5a side, and no lower intermediate units 18b may be provided, or the lower intermediate units 18b may be provided only at the lower welding electrode 5b side, and no intermediate units 18a may be provided. Between these cases, in the former case, a workpiece is welded between the upper intermediate electrode 12a of the upper intermediate unit 18a and the lower welding electrode 5b, and in the latter case, a workpiece is welded between the upper welding electrode 5a and the lower intermediate electrode 12b of the lower intermediate unit 18b.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Rotary-type resistance-welding equipment
- 2: Equipment main body
- 3: Control unit
- 4 ·: Welding power supply
- 5a, 5b: Welding electrode (upper, lower)
- 7: Pressing unit
- 10: Intermediate electrode set
- 11 (11 a, 11b): Intermediate electrode set jig (upper, lower)
- 12 (12a, 12b): Intermediate electrode (upper, lower)
- 18 (18a, 18b): Intermediate unit (upper, lower)
- W: Workpiece

## Claims

1. Resistance-welding equipment (1) comprising an equipment main body (2) including:
a pair of upper and lower welding electrodes (5a, 5b) provided so as to be movable up and down and configured to weld a workpiece interposed therebetween with a current applied thereto;
a pressing unit (7) configured to press the workpiece via the upper and lower welding electrodes during the welding; and
an intermediate electrode set (10) disposed between the upper and lower welding electrodes and provided at at least one of the upper and lower welding electrode sides,
wherein the intermediate electrode set includes a plurality of intermediate units (18), each intermediate unit having an intermediate electrode set jig (11) and an intermediate electrode (12) attachable to and detachable from the intermediate electrode set jig, and is configured as a rotary type in which the plurality of intermediate units are provided so as to be rotatable in a circumferential direction such that the plurality of intermediate units sequentially stop at a welding position that is aligned with the upper and lower welding electrodes in an up-down direction, and
the intermediate electrode set (10) is configured to resistance-weld the workpiece, while pressing the workpiece by the pressing unit (7), via the intermediate electrode (12) of the intermediate unit (18) at the welding position; being **characterised in that**
the welding electrode (5a, 5b) has an electrode portion configured to surface-contact a power supply surface (13) of the intermediate electrode (12) such that electric power is supplied from the welding electrode to the intermediate electrode, and
dimensions of a diameter D of the power supply surface of each intermediate electrode and a height H of each intermediate electrode satisfy D/H≥1/1.2.

2. The resistance-welding equipment (1) as claimed in claim 1, wherein
the intermediate electrode set (10) includes a plurality of pairs of upper and lower intermediate units (18a, 18b), and is configured to resistance-weld, via the upper and lower intermediate electrodes (12a, 12b) at the welding position being supplied with electric power through the upper and lower welding electrodes (5a, 5b), a workpiece interposed between the upper and lower intermediate electrodes.

3. The resistance-welding equipment (1) as claimed in claim 1 or 2, wherein
in a state where the intermediate electrode (12) of the intermediate unit (18) is stopped at the welding position, one workpiece is subjected to resistance welding or two or more workpieces are continuously subjected to resistance welding.

4. The resistance-welding equipment (1) as claimed in claim 1 or 2, wherein
in the intermediate electrode set (10), the intermediate electrode set jig (11) that holds the intermediate electrodes (12) is formed with a holding hole (11d, 11e) and the intermediate electrode has a portion to be held (14) that is inserted into the holding hole, the holding hole and the portion to be held are formed in the same tapered shapes (T1, T2), such that centering adjustment of the intermediate electrode with respect to the intermediate electrode set jig is performed by the portion to be held of the intermediate electrode being inserted into the holding hole of the intermediate electrode set jig.

5. The resistance-welding equipment (1) as claimed in any one of claims 1 to 4, comprising a cooling device configured to forcedly cool each intermediate electrode (12) at at least a welding standby position that is not the welding position.

6. The resistance-welding equipment (1) as claimed in any one of claims 1 to 5, wherein
electrode portions (16) of the intermediate electrodes (12) are provided so as to be attachable and detachable.

## Patentansprüche

1. Widerstandsschweißausrüstung (1), umfassend einen Ausrüstungshauptkörper (2), beinhaltend:
ein Paar obere und untere Schweißelektroden (5a, 5b), die so bereitgestellt sind, dass sie auf und ab bewegbar sind, und konfiguriert sind, um ein dazwischen angeordnetes Werkstück mit einem daran angelegten Strom zu schweißen;
eine Presseinheit (7), die konfiguriert ist, um das Werkstück während des Schweißens über die oberen und unteren Schweißelektroden zu pressen; und
einen Zwischenelektrodensatz (10), der zwischen den oberen und unteren Schweißelektroden angeordnet und an mindestens einer der oberen und unteren Schweißelektrodenseiten bereitgestellt ist,
wobei der Zwischenelektrodensatz eine Vielzahl von Zwischeneinheiten (18) beinhaltet, wobei jede Zwischeneinheit eine Zwischenelektrodensatz-Spannvorrichtung (11) und eine Zwischenelektrode (12) aufweist, die an der Zwischenelektrodensatz-Spannvorrichtung anbringbar und von dieser abnehmbar ist, und als Drehausführung konfiguriert ist, bei der die Vielzahl von Zwischeneinheiten so bereitgestellt sind, dass sie in einer Umfangsrichtung drehbar sind, so dass die Vielzahl von Zwischeneinheiten sequenziell an einer Schweißposition anhalten, die mit den oberen und unteren Schweißelektroden in einer Auf-Ab-Richtung ausgerichtet ist, und
der Zwischenelektrodensatz (10) zum Widerstandsschweißen des Werkstücks konfiguriert ist, während des Pressens des Werkstücks durch die Presseinheit (7), über die
Zwischenelektrode (12) der Zwischeneinheit (18) an der Schweißposition;
**dadurch gekennzeichnet, dass**:
die Schweißelektrode (5a, 5b) einen Elektrodenabschnitt aufweist, der zum Oberflächenkontaktieren einer Stromzuführungsfläche (13) der Zwischenelektrode (12) konfiguriert ist, so dass elektrischer Strom von der Schweißelektrode an die Zwischenelektrode geliefert wird, und
Abmessungen eines Durchmessers D der Stromzuführungsfläche jeder Zwischenelektrode und eine Höhe H jeder Zwischenelektrode D/H ≥ 1/1,2 erfüllen.

2. Widerstandsschweißausrüstung (1) nach Anspruch 1, wobei der Zwischenelektrodensatz (10) eine Vielzahl von Paaren oberer und unterer Zwischeneinheiten (18a, 18b) beinhaltet und konfiguriert ist zum Widerstandsschweißen, über die oberen und unteren Zwischenelektroden (12a, 12b) an der Schweißposition, die durch die oberen und unteren Schweißelektroden (5a, 5b) mit elektrischem Strom versorgt werden, eines zwischen den oberen und unteren Zwischenelektroden angeordneten Werkstücks.

3. Widerstandsschweißausrüstung (1) nach Anspruch 1 oder 2, wobei
in einem Zustand, in dem die Zwischenelektrode (12) der Zwischeneinheit (18) an der Schweißposition angehalten wird, ein Werkstück dem Widerstandsschweißen unterzogen wird oder zwei oder mehr Werkstücke kontinuierlich dem Widerstandsschweißen unterzogen werden.

4. Widerstandsschweißausrüstung (1) nach Anspruch 1 oder 2, wobei
in dem Zwischenelektrodensatz (10), die Zwischenelektrodensatz-Spannvorrichtung (11), die die Zwischenelektroden (12) hält, mit einem Halteloch (11d, 11e) ausgebildet ist und die Zwischenelektrode einen zu haltenden Abschnitt (14) aufweist, der in das Halteloch eingeführt wird, das Halteloch und der zu haltende Abschnitt in den gleichen konischen Formen (T1, T2) ausgebildet sind, so dass eine Zentrierungseinstellung der Zwischenelektrode in Bezug auf die Zwischenelektrodensetz-Spannvorrichtung von dem zu haltenden Abschnitt der Zwischenelektrode durchgeführt wird, der in das Halteloch der Zwischenelektroden-Spannvorrichtung eingeführt wird.

5. Widerstandsschweißausrüstung (1) nach einem der Ansprüche 1 bis 4, umfassend eine Kühlvorrichtung, die konfiguriert ist, um jede Zwischenelektrode (12) an mindestens einer Schweißbereitschaftsposition, die nicht die Schweißposition ist, zwangsweise zu kühlen.

6. Widerstandsschweißausrüstung (1) nach einem der Ansprüche 1 bis 5, wobei
Elektrodenabschnitte (16) der Zwischenelektroden (12) anbringbar und abnehmbar bereitgestellt sind.

## Revendications

1. Equipement de soudage par résistance (1) comprenant un corps principal d'équipement (2) comprenant :
une paire d'électrodes de soudage supérieure et inférieure (5a, 5b) disposées de façon à pouvoir être déplacées vers le haut et vers le bas et conçues pour souder une pièce de travail interposée entre elles avec un courant qui leur est appliqué ;
une unité de pressage (7) conçue pour presser la pièce de travail par l'intermédiaire des électrodes de soudage supérieure et inférieure durant le soudage ; et
un ensemble d'électrodes intermédiaires (10) disposées entre les électrodes de soudage supérieure et inférieure et prévues sur au moins l'un des côtés d'électrodes de soudage supérieur et inférieur,
ledit ensemble d'électrodes intermédiaires comprenant une pluralité d'unités intermédiaires (18), chaque unité intermédiaire possédant un gabarit d'ensemble d'électrodes intermédiaires (11) et une électrode intermédiaire (12) pouvant être fixée au gabarit d'ensemble d'électrodes intermédiaire et pouvant être détachée de celui-ci, et étant conçue sous forme de type rotatif dans lequel la pluralité d'unités intermédiaires sont prévues de façon à pouvoir tourner dans une direction circonférentielle de sorte que la pluralité d'unités intermédiaires s'arrêtent séquentiellement au niveau d'une position de soudage qui est alignée avec les électrodes de soudage supérieure et inférieure dans une direction haut-bas, et
l'ensemble d'électrodes intermédiaires (10) étant conçues pour souder par résistance la pièce de travail, tout en pressant la pièce de travail au moyen de l'unité de pressage (7), par l'intermédiaire de
l'électrode intermédiaire (12) de l'unité intermédiaire (18) au niveau de la position de soudage ;
étant **caractérisé en ce que**
l'électrode de soudage (5a, 5b) possède une partie d'électrode conçue pour entrer en contact de surface avec une surface d'alimentation de puissance (13) de l'électrode intermédiaire (12) de sorte que la puissance électrique soit fournie à partir de l'électrode de soudage à l'électrode intermédiaire, et
les dimensions d'un diamètre D de la surface d'alimentation de puissance de chaque électrode intermédiaire et d'une hauteur H de chaque électrode intermédiaire satisfont à D/H ≥ 1/1,2.

2. Équipement de soudage par résistance (1) selon la revendication 1, ledit ensemble d'électrodes intermédiaires (10) comprenant une pluralité de paires d'unités intermédiaires supérieures et
inférieures (18a, 18b), et étant conçues pour souder par résistance, par l'intermédiaire des électrodes intermédiaires supérieure et inférieure (12a, 12b) au niveau de la position de soudage qui est alimentée en puissance électrique par les électrodes de soudage supérieure et inférieure (5a, 5b), une pièce de travail interposée entre les électrodes intermédiaires supérieure et inférieure.

3. Équipement de soudage par résistance (1) selon la revendication 1 ou 2,
dans un état où l'électrode intermédiaire (12) de l'unité intermédiaire (18) est arrêtée au niveau de la position de soudage, une pièce de travail étant soumise à un soudage par résistance ou deux, ou plus, pièces de travail sont soumises en continu à un soudage par résistance.

4. Équipement de soudage par résistance (1) selon la revendication 1 ou 2,
dans l'ensemble d'électrodes intermédiaires (10), ledit gabarit d'ensemble d'électrodes intermédiaires (11) qui maintient les électrodes intermédiaires (12) étant formé avec un trou de maintien (11d, 11e) et ladite électrode intermédiaire possédant une partie à maintenir (14) qui est insérée dans le trou de maintien, le trou de maintien et la partie à maintenir étant formée selon les mêmes formes effilées (T1, T2), de sorte que le réglage de centrage de l'électrode intermédiaire par rapport au gabarit d'ensemble d'électrodes intermédiaires soit réalisé par la partie à maintenir de l'électrode intermédiaire insérée dans le trou de maintien du gabarit d'ensemble d'électrodes intermédiaires.

5. Équipement de soudage par résistance (1) selon l'une quelconque des revendications 1 à 4, comprenant un dispositif de refroidissement conçu pour refroidir de manière forcée chaque électrode intermédiaire (12) au niveau d'au moins une position d'attente de soudage qui n'est pas la position de soudage.

6. Équipement de soudage par résistance (1) selon l'une quelconque des revendications 1 à 5,
des parties d'électrode (16) des électrodes intermédiaires (12) étant disposées de façon à pouvoir être fixées et détachées.
